# FASCICULE DE BREVET EUROPEEN

(11) **EP 2 111 292 B1**
(45) Date de publication et mention de la délivrance du brevet: **13.10.2010**
(21) Numéro de dépôt: 07872420.0
(22) Date de dépôt: 20.12.2007
(51) Int. Cl.: B01J 13/00

(54) **AEROGELS A BASE DE NANOTUBES DE CARBONE**
AUF KOHLENSTOFF-NANORÖHRCHEN BASIERENDE AEROGELE
CARBON NANOTUBES BASED AEROGELS

(30) Priorité: 20.12.2006 FR 0611143
(43) Date de publication de la demande: 28.10.2009
(73) Titulaire: Centre National de la Recherche Scientifique (CNRS), 75016 Paris (FR)
(72) Inventeur: BACKOV, Rénal, F-33200 Bordeaux (FR); DELHAES, Pierre, F-33170 Gradignan (FR); CARN, Florent, F-40300 Orthevielle (FR); LEROY, Céline, F-33160 Saint Medard en Jalle (FR)
(74) Mandataire: Jacobson, Claude
(86) Numéro de dépôt international: PCT/FR2007/002135
(87) Numéro de publication internationale: WO 2008/096065

(56) Documents cités:
- WO-A-2004/009673
- CHEN ET AL: "A new method for the preparation of stable carbon nanotube organogels" CARBON, ELSEVIER, OXFORD, GB, vol. 44, no. 11, septembre 2006 (2006-09), pages 2142-2146, XP005523299 ISSN: 0008-6223
- MOTTA ET AL: "The parameter space for the direct spinning of fibres and films of carbon nanotubes" PHYSICA E - LOW-DIMENSIONAL SYSTEMS AND NANOSTRUCTURES, ELSEVIER SCIENCE BV, NL, vol. 37, no. 1-2, 28 août 2006 (2006-08-28), pages 40-43, XP005925431 ISSN: 1386-9477

## Description

La présente invention a trait à de nouveaux matériaux de type aérogels de carbone, qui se révèlent utiles notamment à titre de matériaux de séparation, en particulier adaptés pour la filtration de milieux liquides.

Les matériaux communément désignés par *"aérogels de carbone"* sont des matériaux macroscopiques essentiellement (et généralement exclusivement) constitués de carbone, qui présentent une structure extrêmement poreuse, entraînant une densité apparente très réduite. Typiquement, dans un aérogel de carbone, le volume occupé par les pores représente au moins 70% du volume total du matériau, avec une densité apparente correspondante généralement inférieure à 0,6 g/cm³. Pour plus de détails concernant les structures de type aérogels de carbone, on pourra notamment se reporter à l'article *"les aérogels et le structure alvéolaires : deux exemples de mousses de carbone"* de L. Kocon et T. Piquero, dans L'actualité Chimique, N° 245-246, pp. 119-123 (mars-avril 2006).

L'article "a new method for the preparation of stable carbon nanotube organogels" de Chen, Xue, Ramasubramaniam et Liu, dans Carbon, Vol. 44, N° 11, pp. 2142-2146 (septembre 2006) décrit un procédé de préparation d'un aérogel de carbone comprenant les étapes suivantes: A) on réalise une dispersion de nanotubes de carbone dans CHCl₃; et B) la dispersion est lyophilisée. L'aérogel obtenu est utilisé à titre de support d'espèces catalytiques.

Les aérogels de carbone sont généralement obtenus par des processus dits par "réplique" (*"templating"* en anglais). Dans ces procédés, schématiquement, on forme une structure tridimensionnelle poreuse de carbone ou d'un précurseur de carbone en employant une structure solide ou une organisation moléculaire de type cristal liquide à titre de "moule" de la structure recherchée. Ce "moule", dit agent texturant (*"template"* en anglais) peut prendre différentes formes selon le procédé utilisé. Dans ce cadre, il existe trois grandes familles de procédés par texturation conduisant à des aux aérogels de carbone :

### (1) l'emploi de solides micro- ou mésoporeux à titre de texturants solides

Selon ce mode de préparation, l'aérogel est synthétisé en remplissant par du carbone les pores d'un matériau poreux employé à titre de moule. Typiquement, on emploie des matériaux de type alumine, silice ou aluminosilicate, sous la forme d'un matériau microporeux ou mésoporeux (zéolithe ou mésostructures de type MCM-41, par exemple). Ensuite, le moule est détruit, en général par attaque acide, ce par quoi on récupère l'empreinte du moule formée totalement de carbone. Dans ces techniques, l'introduction initiale du carbone dans le matériau texturant peut être effectuée par un dépôt direct de carbone, en général par dépôt chimique en phase vapeur, notamment par vapodéposition (*"Chemical vapor deposition"* CVD), ou bien par imprégnation d'un liquide organique au sein des pores, qui est ensuite calciné pour être converti en carbone. Des exemples de préparation d'aérogels selon ce mode sont notamment décrits dans les articles "Nouveaux concepts d'élaboration de matériaux carbonés poreux" de C. Vix-Guterl, J. Parmentier, P. Delhaés, dans L'actualité chimique, n° 245-246, pp 124-128 (mars-avril 2006). et *"*Synthesis of highly ordered carbon molecular sieves via template-mediated structural transformation" de R. Ryoo, S.-H. Soo, S. Jun, dans The Journal of Physical chemistry B, 103 (37), pp. 7743-7746 (1999).

### (2) la texturation de carbone en milieu liquide ou gélifié

Selon cet autre mode de réalisation, on réalise l'organisation du carbone sous forme d'aérogel au sein d'un milieu liquide ou gélifié, typiquement sous la forme d'un cristal liquide. Dans ce cas, le "moule" employé n'est pas de nature solide, mais il imprime néanmoins une structure organisée à la structure de carbone synthétisée.

L'aérogel utilisé dans ce cadre est en général obtenu en structurant directement une mésophase carbonée, puis en carbonisant le milieu de formation de la structure, notamment en mettant en oeuvre les techniques décrites dans les articles *"*High-thermal conductivity, mesophase pitch-derived carbon foams : effect of precursors on structure and properties" de J. Klett et col., dans Carbon, 38, pp. 153-173 (2000) ou *"*Novel high strength graphitic foam", de T. Beechem, K. Lafdi, dans Carbon, 44, pp. 1548-1549 (2002).

### (3) la texturation de précurseurs carbonés en milieu liquide ou gélifié

Selon cette autre variante, on forme un aérogel non pas en structurant directement du carbone comme dans la variante précédente, mais des constituants organiques, ce par quoi on obtient un aérogel organique, qui est ensuite carbonisé par traitement thermique pour obtenir l'aérogel de carbone recherché. Dans ce cadre, on peut notamment employer le procédé décrit dans les articles *"*Fabrication of nano-structure control of carbon aerogels via microemulsion templatted sol-gel polymerisation method", de D. Wu, R. Fu, M.S. Dresselhaus, G. Dresselhaus, dans Carbon, 44, pp 675-680 (2005) *ou "*Preparation and properties of resorcinol formaldehyde organic and carbon gels", de S.A. AI-Muthtsabeb, J.A. Ritter, dans Adv. Mater., 15(2), pp. 101-104 (2003).

Les aérogels de carbone tels qu'obtenus selon les procédés par texturation précités sont des matériaux aux propriétés intéressantes, qui trouvent de nombreuses applications. De façon générale, il peuvent être employés dans pratiquement toutes les applications connues des matériaux de type aérogels, où peuvent être mis à profit leur porosité élevée et leur relativement haute surface spécifique. En particulier, leur inertie chimique vis-à-vis de nombreux réactifs et leur bonne stabilité thermique en font des matériaux intéressants notamment à titre de support de catalyse, en particulier en milieu réducteur. Ils peuvent aussi être employés à titre d'isolants phoniques ou anti-vibrationnels, compte tenu de leur relativement bonne résistance mécanique.

Cela étant, en marge de ces avantages, les aérogels de carbone se révèlent mal adaptés à d'autres applications connues des aérogels, notamment dans le domaine de la séparation, et spécialement dans le domaine de la filtration solide/liquide. En fait, il s'avère qu'on ne connaît pas actuellement d'aérogels de carbone présentant à la fois de bonnes propriétés en terme d'efficacité (précision) de séparation et de vitesse de séparation.

Plus précisément, la plupart des aérogels actuels présentent une population de pores relativement resserrée sur une valeur moyenne, ce qui interdit une optimisation à la fois en termes d'efficacité et de vitesse de séparation. En effet, lorsqu'on effectue une séparation en employant des matériaux poreux présentant une population de pores de taille relativement homogène, l'efficacité de la séparation est d'autant plus efficace que la taille moyenne des pores diminue, mais, à l'inverse, la vitesse de séparation augmente avec la taille moyenne des pores. En d'autres termes, avec les aérogels actuels, lorsque la valeur moyenne de la taille de pores est faible, l'aérogel est adapté à une séparation efficace, mais avec une vitesse de séparation réduite. Au contraire, lorsque la valeur moyenne de la taille de pore est élevée, l'aérogel conduit à des vitesses de séparation élevées, mais avec une efficacité qui s'effondre. Sur cette base, à l'heure actuelle, il est uniquement possible de réaliser un compromis en utilisant des aérogels ayant des pores de taille resserrée sur une valeur ni trop élevée ni trop faible, ce qui conduit à des résultats médiocres en termes d'efficacité et de vitesse de séparation, notamment en termes de courbe de percée.

Un but de la présente invention est de fournir des aérogels de carbone adaptés notamment à titre de matériaux de séparation, capable en particulier de conduire à des résultats intéressants à la fois en termes d'efficacité et de vitesse de séparation.

A cet effet, la présente invention a pour objet des aérogels de carbone d'un nouveau type, qui sont obtenus par coagulation de nanotubes de carbone sous la forme d'une structure alvéolaire.

Plus précisément, les aérogels de l'invention sont obtenus selon un procédé particulier, qui constitue un autre objet particulier de l'invention. Ce procédé comprend les étapes suivantes :
(A) on réalise une dispersion de nanotubes de carbone dans de l'eau, en employant un agent tensioactif dispersant (généralement ionique, et de préférence anionique) ;
(B) on réalise une mousse à partir de la dispersion aqueuse de nanotubes obtenue dans l'étape (A), par foisonnement de la dispersion sous l'effet d'un gaz en présence d'un agent moussant ; et
(C) on congèle la mousse obtenue dans l'étape (B), puis on élimine l'eau par sublimation, généralement par lyophilisation à froid.

Avantageusement, le procédé de l'invention peut comprendre, après les étapes (A) à (C), une étape (D) supplémentaire dans laquelle on traite thermiquement le matériau obtenu à l'issue de l'étape (C), typiquement à une température supérieure ou égale à 400°C, par exemple d'au moins 600°C, notamment d'au moins 800°C, voire d'au moins 1000°C.

Cette étape supplémentaire (D) permet notamment d'éliminer (par pyrolyse) au moins une partie, et de préférence la totalité, des agents tensioactifs et moussants utilisés dans les étapes (A) et (B). Lorsqu'on souhaite éliminer totalement ces agents pour obtenir à l'issue du procédé un matériau essentiellement constitué de carbone, l'étape (C) est avantageusement conduite à une température supérieure ou égale à 1200°C, ce qui permet d'assurer une carbonisation totale des espèces organiques initialement présentes.

Le traitement thermique de l'étape (D) peut également permettre une consolidation mécanique de la structure obtenue après la lyophilisation de l'étape (C). Pour obtenir un tel effet de consolidation, il est avantageux que l'étape (D) soit conduite en présence de composés organiques (ce qui est généralement le cas : les tensioactifs et/ou les agents moussants des étapes (A) et (B) sont le plus souvent de composés organiques) et à une température avantageusement supérieure à 800°C, avantageusement supérieure à 1000°C par exemple supérieure ou égale à 1200°C. Dans ce cadre, les composés organiques sont susceptibles de jouer le rôle de précurseurs organiques en conduisant par pyrolyse à la formation de carbone capable de lier les nanotubes de carbone entre eux.

A l'issue du procédé de l'invention, on obtient un matériau à base de nanotubes de carbones agglomérés (coagulés), généralement monolithique, dont la structure reproduit sensiblement celle des parois de la mousse réalisée dans l'étape (B). De façon générale, les aérogels de carbone ainsi obtenus présentent une structure très spécifique, à porosité essentiellement ouverte, qui comprend en général à la fois :
- une "macroporosité" constituée d'alvéoles (ou « macropores ») ayant une dimension moyenne supérieure à 40 microns, plus généralement supérieure ou égale à 50 microns, reflétant la structure de la mousse formée dans l'étape (B), l'essentiel des pores de cette macroporosité ayant typiquement des dimensions comprises entre 50 microns et 600 microns ; et
- une "super-mésoporosité", essentiellement localisée au sein des parois des alvéoles de la macroporosité précitée, cette nanoporosité comprenant des pores de dimension moyenne inférieure à 60 nm, correspondant essentiellement aux interstices inter nanotubes présents dans les parois de la mousse formée dans l'étape (B).

Cette structure particulière des aérogels de l'invention peut notamment être mise en évidence sur des clichés du matériaux obtenus par microscopie électronique par balayage (MEB), dont des exemples sont donnés sur l'as Figures ci-annexées. Les clichés obtenus par microscopie électronique par balayage mettent le plus souvent en évidence que les parois de la structure obtenue comprennent des nanotubes sensiblement alignés (ce qui est très vraisemblablement dû, notamment en partie, aux phénomènes de cisaillement résultant du ruissellement d'eau (ou drainage) qui a lieu lors de la formation de mousse de l'étape (B) du procédé). La microscopie électronique par balayage permet par ailleurs de mesurer les dimensions de pores présents.

La structure particulière des aérogels de l'invention se traduit par ailleurs par une très faible densité apparente, en particulier bien inférieure à celles de la plupart des aérogels de carbone actuellement connus. Ainsi, généralement, un aérogel tel qu'obtenu selon l'invention a une densité apparente le plus souvent inférieure ou égale à 0,25 g/cm³, généralement inférieure ou égale à 0,2 g/cm³, et typiquement aux alentours de 0,2 g/cm³ (ce qui représente seulement 1/10 de la densité du carbone de type graphite), par exemple de l'ordre de 0,18 g/cm³ à 0,22 g/cm³.

Cette très faible densité apparente traduit un volume poreux très élevé pour les aérogels de l'invention, où, le plus souvent, le volume occupé par les pores représente au moins 80% du volume total du matériau, généralement, au moins 90%, voire au moins 95%.

Par ailleurs, la porosité des aérogels de l'invention est en général une porosité essentiellement ouverte. Cette spécificité peut notamment être mise en évidence par des mesures de densité du matériau par pycnométrie à l'hélium. Dans ce type de mesure, on plonge l'aérogel testé dans de l'hélium gazeux, qui remplit tous les pores accessibles, ce qui permet de déterminer la densité du matériau occupant le volume non rempli par l'hélium. Dans le cas des aérogel de l'invention, on retrouve alors une densité de l'ordre de celle du carbone graphite (de l'ordre de 2), ce qui indique que sensiblement (et généralement quasi-exclusivement) tous les pores du matériau sont accessibles et que sensiblement tous les espaces internes des nanotubes restent accessibles.

De ce fait, les aérogels de l'invention ont le plus souvent une surface spécifique élevée, en général comprise entre 25 et 300 m²/g, cette surface spécifique étant avantageusement supérieure à 30 m²/g, de préférence d'au moins 35m²/g. Au sens de la présente description, le terme de "surface spécifique " se réfère à la surface spécifique BET, telle que déterminée par adsorption d'azote, selon la méthode bien connue dite de BRUNAUER - EMMET - TELLER qui est décrite dans The journal of the American Chemical Society, volume 60, page 309 (1938), et correspondant à la norme internationale ISO 5794/1 (annexe D).

La structure particulière des aérogels de carbone obtenus selon l'invention les rend particulièrement adaptés à titre de matériaux de séparation, notamment pour effectuer des séparations de type solide/liquide. Dans ce cadre, la macroporosité permet d'obtenir une bonne diffusion des constituants, induisant ainsi des vitesses de séparation élevée, la nanoporosité permettant quant à elle d'obtenir une bonne efficacité de séparation. Dans ce cadre, les aérogels de l'invention peuvent typiquement être employés pour la constitution de membrane ou de matériaux de filtration, notamment pour la filtration de milieux biologique (sang par exemple) ou bien pour le nettoyage (chimique et/ou bactériologique) d'eaux usées. Les aérogels de l'invention peuvent aussi être employés à titre de matériaux de remplissage de colonnes de chromatographie liquide.

Compte tenu de leur structure spécifique, les aérogels de l'invention sont également bien adaptés à d'autres applications. En particulier, du fait du caractère biocompatible du carbone, ils peuvent notamment être employés à titre de biomatériaux, et en particulier à titre de support de croissance cellulaire, notamment de fibroblastes ou d'ostéoblastes,. Dans ce type d'application, la porosité particulière du matériau assure une colonisation optimale : la macroporosité assure une diffusion des cellules, qui peuvent accéder sensiblement à l'ensemble de la surface du matériau, et la nanoporosité induit une irrégularité de la surface du matériau propre à assurer une bonne fixation des cellules sur l'aérogel. Les aérogels de l'invention peuvent en particulier être utilisés dans le cadre de remplacement de tissus osseux.

Plus généralement les aérogels de l'invention peuvent être employés dans la plupart des applications connues des aérogels à base de carbone, dans la mesure où ils présentent les avantages spécifiques de ces matériaux, notamment une grande inertie chimique, notamment vis-à-vis des réducteurs, une stabilité thermique importante jusqu'à plus de 2000°C (en milieu non oxydant), ainsi qu'une très bonne conductivité thermique et électrique.

Les aérogels de l'invention peuvent ainsi, en particulier, être utilisés à titre de support d'espèces catalytiques, par exemple pour la catalyse de réactions en milieu réducteur, notamment à haute température, et ce d'autant plus qu'ils présentent le plus souvent l'avantage d'être supercompressibles.

Les aérogels de l'invention peuvent aussi être employées pour le stockage de liquide non mouillant, notamment pour le stockage de liquides énergétiques dans des membranes de piles à combustibles, ou comme électrode négative dans des piles au lithium.

Les aérogels selon l'invention peuvent également être employées à titre d'isolants acoustiques ou anti-vibrationnels. Dans ce cadre spécifique, on préférera employer des aérogels consolidés mécaniquement tels qu'obtenus à l'issue de l'étape (D) précitée, avantageusement des aérogels où les nanotubes sont liés entre eux par du carbone issu de la pyrolyse de composés organiques jouant le rôle de précurseur carbonés.

Ces différentes utilisations des aérogels de l'invention constituent encore un objet particulier de l'invention.

De façon inattendue, les aérogels de carbone de l'invention et leurs avantages spécifiques sont obtenus très simplement, par la succession d'étapes (A) à (C) et éventuellement (D) du procédé de l'invention.

Le procédé de l'invention présente, entre autres, l'avantage d'être simple à mettre en oeuvre et peu onéreux. En outre, il est mis en oeuvre en milieu aqueux et n'implique pas, dans le cas général, de rejets sujets à des traitements spécifique, ce qui en fait un procédé exploitable au niveau industriel.

Différentes caractéristiques et modes de réalisation avantageux du procédé de l'invention vont maintenant être décrites plus en détails.

L'étape (A) du procédé de l'invention consiste à réaliser une dispersion aqueuse de nanotubes.

Par "nanotube", on entend, au sens de la présente description, une structure tubulaire à base de carbone, qui est en général essentiellement à base de carbone sous forme de feuillets de graphène, et qui possède un diamètre compris entre 1 et 200 nm (dimensions mesurables notamment à partir de clichés de microscopie électronique en transmission). Ces composés appartiennent à la famille dite des "matériaux nanostructurés", qui présentent au moins une dimension caractéristique de l'ordre du nanomètre. Pour plus de détails à concernant ces matériaux et leurs modes de synthèse, on pourra notamment se reporter aux articles "Nanotubes from carbon" de P.M. Ajayan (Chem. Rev., vol. 99, p.1787, 1999) et *"*Carbon nanofibers: catalytic synthesis and applications" de K. de Jong et J.W. Geus (Catal. Rev. Sci. Eng., vol. 42, p. 481, 2000).

Les nanotubes employés dans le procédé de l'invention sont typiquement des nanotubes de type mutifeuillets, à savoir des structures cylindriques creuses à base de feuilles de graphène enroulées sur elles-mêmes, comprenant plusieurs cylindres concentriques à base de graphène.

Avantageusement, on emploiera dans l'étape (A) des nanotubes de type mutifeuillets ayant un diamètre moyen compris entre 10 et 100 nm, ce diamètre étant le plus souvent d'au moins 30 nm, par exemple entre 50 et 80 nm. Par ailleurs, la longueur moyenne de nanotubes employés dans l'étape (A) est en général entre 1 et 20 microns, typiquement entre 5 et 15 microns (par exemple de l'ordre de 10 microns).

Dans l'étape (A), la dispersion des nanotubes dans, l'eau est effectuée en présence d'un agent tensioactif adapté, à savoir adapté pour stabiliser l'interface nanotube/eau.

La dispersion peut être effectuée selon tout moyen connu en soi. Elle est typiquement réalisée en soumettant un mélange eau/nanotube/tensioactif à un cisaillement suffisant, avantageusement par soumission à des ultrasons (sonication).

L'agent tensioactif employé pour assurer la dispersion est de préférence un agent tensioactif ionique. Se révèlent notamment adapté à la mise en oeuvre de l'invention les tensioactifs anioniques notamment de type sulfate, sulfonates ou carboxylates, comme par exemple les alkylsulfates ou alkylsulfonates, ou les sels de carboxyméthylcellulose (notamment le sel de sodium de la carboxyméthylcellulose). En général, le tensioactif employé dans l'étape (A) est utilisé dans la dispersion de nanotubes en une concentration inférieure à sa concentration micellaire critique (CMC), seuil au-delà duquel les nanotubes tendraient à s'agréger par interaction de déplétion.

La concentration en nanotubes dans la dispersion de l'étape (A) peut varier en une assez large mesure en fonction du tensioactif utilisé. Néanmoins, dans le cas le plus général, on préfère que la dispersion préparée dans l'étape (A) comprenne au moins 0,5 g de nanotubes par litre, plus avantageusement au moins 1 g de nanotubes par litre, plus avantageusement au moins 5 g de nanotubes par litre, voire au moins 10 g de nanotubes par litre, cette concentration étant le plus souvent comprise entre 1 et 15 g de nanotubes par litre.

A noter que cette concentration en nanotubes est limitée dans le cas de l'utilisation de certains tensioactifs. Par exemple, on atteint au maximum des concentrations de l'ordre de 1 g de nanotubes par litres avec des tensioactifs tels que le dodécyle sulfate de sodium SDS.

En revanche, d'autres tensioactifs permettent d'accéder à des concentrations plus élevées. Ainsi, selon un mode de réalisation avantageux, le tensioactif utilisé dans l'étape (A) est un sel de carboxyméthylcellulose, notamment le sel de sodium, ce qui permet d'obtenir une concentration en nanotube pouvant aller jusqu'à 15 g de nanotubes par litre de dispersion, et ce en conservant une dispersion homogène.

Dans l'étape (B) du procédé de l'invention, on réalise une mousse à partir de la dispersion réalisée dans l'étape (A), par foisonnement sous l'effet d'un gaz. Le plus souvent, ce foisonnement est effectué en réalisant un bullage d'un gaz au sein de la dispersion réalisée dans l'étape (A), ce gaz étant avantageusement délivré au travers d'un verre fritté.

La mousse réalisée dans le cadre de l'étape (B) est une mousse de type liquide/gaz dont la structure détermine la morphologie de l'aérogel final.

Cette mousse est formée en présence d'un agent moussant, à savoir un agent capable de stabiliser l'interface eau/gaz dans la mousse formée.

A cet effet, on rajoute généralement un agent moussant à la dispersion telle qu'obtenue à l'issue de l'étape (A), par exemple un tensioactif adapté à cet effet, tel que, par exemple, un tensioactif éthoxylé non ionique tel que Tergitol (notamment le Tergitol NP9 (de formule C₁₅H₂₄O(C₂H₄O)₉).

Selon un mode de réalisation intéressant du procédé de l'invention, on peut employer, à titre d'agent moussant dans l'étape (B), de l'amidon, ou bien, alternativement, un sucre, par exemple un polysaccharide. L'emploi d'amidon, ou de sucre, notamment de type polysaccharide, se révèle en particulier avantageux dans le cas où l'étape (D) est mise en oeuvre. En effet, l'amidon introduit dans l'étape (B) se retrouve dans le matériau obtenu à l'issue de l'étape (C). Lorsque l'étape (D) est conduite, au moins une partie de l'amidon est carbonisée, ce qui permet généralement de lier entre eux les nanotubes constitutifs du matériau, ce qui se traduit par une augmentation de la cohésion du matériau, et donc une amélioration de ses propriétés mécaniques, mesurable notamment par le module d'Young. Pour obtenir un tel effet d'amélioration des propriétés mécaniques dans le cas de l'emploi d'amidon, on préfère que l'étape 5D) soit conduite à une température d'au moins 600°C, de préférence d'au moins 800°C, plus préférentiellement d'au moins 1000°C, voire d'au moins 1200°C.

Il arrive dans certains cas que l'agent tensioactif employé dans l'étape (A) soit propre à assurer l'effet de stabilisation de la mousse de l'étape (B). C'est en particulier le cas du SDS, qui se révèle à la fois utile à titre de tensioactif pour la stabilisation de l'interface eau/nanotubes dans l'étape (A) et pour la stabilisation de l'interface (eau/gaz) dans l'étape (B). Dans ce cas de figure particulier, on ne rajoute pas d'agent moussant à la dispersion réalisée dans l'étape (A), mais il peut s'avérer avantageux d'employer le tensioactif de l'étape 5a) en excès par rapport à la quantité requise pour assurer la stabilisation des nanotubes dans la dispersion. Ainsi, par exemple, dans le cas du SDS, on emploiera avantageusement le tensioactif en une teneur supérieure à 1 g/L, voire à 2 g/L dans la dispersion de l'étape (A). Néanmoins, on utilise en général le SDS en une concentration inférieure à sa concentration micellaire critique (CMC), seuil au-delà duquel les nanotubes s'agrégeraient par interaction de déplétion.

Quelle que soit la nature de l'agent moussant employé dans l'étape (B), la formation de la mousse dans cette étape est avantageusement effectuée en injectant des bulles de gaz dans la dispersion obtenue à l'issue de l'étape (A), additivée si nécessaire (ce qui est le plus souvent la cas) d'un agent moussant, cette injection de bulle de gaz se faisant avantageusement à travers une membrane poreuse telle qu'un verre fritté au-dessus duquel on place la dispersion. Dans ce cas, la solution est généralement placée au fond dans un récipient de taille suffisante et de morphologie adaptée pour permettre le foisonnement de la mousse. Typiquement, on emploie un récipient cylindrique tubulaire muni d'une membrane poreuse de type verre fritté au niveau de sa base (son fond), ce récipient ayant un volume au moins 20 fois égal au volume initial de la dispersion avant moussage.

Dans l'étape (B), le gaz employé pour effectuer le moussage peut varier en une assez large mesure. Il s'agit avantageusement d'air ou d'azote, qui peut éventuellement être additionné d'un composé organique hydrophobe, par exemple du perfluorohexane. Ce composé organique additionnel a notamment pour rôle de stabiliser les interfaces air/eau de la mousse, en minimisant ainsi les phénomènes de mûrissement d'Ostwald et de coalescence qui déstabilisent les mousses néoformées.

On peut contrôler la morphologie de la mousse obtenue dans l'étape (B) en jouant sur plusieurs paramètres, et notamment les suivants :

### - le taux de mouillage de la mousse :

En s'élevant sous l'effet du gaz assurant le moussage, la mousse formée à tendance à perdre son eau par gravité, l'eau tendant à s'écouler vers le bas. Ce phénomène tend à former par une mousse relativement "sèche" avec des bulles non sphériques, de forme polygonale et relativement peu stable. Pour obtenir des bulles plus sphériques et améliorer la stabilité, on peut augmenter le taux d'humidité de la mousse, notamment en contrebalançant la perte en eau due à la gravité en « nourrissant » par de l'eau la mousse en formation, au niveau de sa partie haute. A cet effet, pour ne pas conjointement modifier la composition de la mousse, on peut typiquement arroser le haut de la mousse en formation dans l'étape (B) par une dispersion ayant la même composition que la dispersion qu'on fait mousser par foisonnement, cet arrosage étant de préférence effectué à débit constant, ce qui permet d'obtenir une composition homogène de la mousse tout en évitant, en outre, des phénomènes de coalescence.
Ainsi, dans l'étape (B), le contrôle de la fraction volumique en eau dans la mousse est un bon moyen de contrôler la forme des alvéoles réalisés. Une mousse à faible fraction volumique en eau (mousse sèche) aura des alvéoles de formes polygonales, une mousse à forte fraction volumique en eau (mousse humide) aura des alvéoles de forme beaucoup plus sphérique. Par ailleurs, le contrôle de la fraction volumique en eau des mousses de départ permet également de contrôler la largeur des parois alvéolaires (appelés "bords de Plateau").

### - la taille des bulles (cellules) de la mousse formée

On peut contrôler cette taille en jouant sur la taille des bulles de gaz initialement introduite pour effectuer le foisonnement (en particulier en jouant sur la taille des pore de la membrane poreuse utilisée), ainsi que le débit du gaz employé. A débit de gaz constant, la taille des bulles de la mousse obtenue étant en général d'autant plus élevée que la taille des bulles de gaz injectées sont importantes. Avec des débits constants par exemple de l'ordre de 0,1 à 1 mL/s et des tailles de pores de la membrane poreuse de l'ordre de 10 à 250 microns, on peut typiquement faire varier la taille moyenne des cellules de la mousse obtenues entre 50 et 600 microns.

En général, on obtient dans l'étape (B) une mousse où le rapport volumique liquide/gaz est inférieur ou égal à 0,1, ce rapport étant typiquement compris entre 0,01 et 0,1.

L'étape (C) du procédé vise schématiquement à figer la structure de la mousse obtenue dans l'étape (B).

La mousse obtenue à l'issue de l'étape (B) est relativement stable, mais pas suffisante pour qu'on puisse envisager son séchage par évaporation. De ce fait, dans l'étape (C), l'eau est éliminée par congélation puis lyophilisation.

La congélation de l'étape (C) est avantageusement effectuée de façon à figer la structure de la mousse le plus rapidement possible, de façon à éviter tout phénomène de coalescence. A cet effet, la congélation est avantageusement réalisée en plaçant la mousse obtenue dans l'étape (B) à une température inférieure à -50°C, plus avantageusement inférieure à -80°C.

L'étape de sublimation est quant à elle la plus souvent une lyophilisation à froid conduite selon tout moyen connue en soi (notamment selon la technique usuelle décrite par exemple sur le site www.lyo-san.callyophilisation.htm).

L'étape (D), optionnelle, de traitement thermique peut être conduite notamment en étuve ou dans un four, en général dans une atmosphère inerte non oxydante, avec de préférence une montée en température et un refroidissement progressifs, avec typiquement des montée et des descentes en températures de l'ordre de quelques degrés par minute.

Pour optimiser cette étape, il peut être avantageux que le matériau soumis au traitement thermique comprenne des adjuvants carbonés utilisés à titre de précurseur de carbone. Lors du traitement thermique, ces adjuvants carbonés se décomposent en carbone, ce par quoi ils sont susceptibles de lier les nanotubes entre eux dans la structure formée, conduisant ainsi à une amélioration de la cohésion et des propriétés mécaniques du matériau obtenu.

De tels adjuvants carbonés peuvent par exemple être introduits au cours des étapes (A) et/ou (B). A cet effet, comme souligné plus haut, on utilise avantageusement de l'amidon ou un sucre (polysaccharide par exemple) à titre d'agent moussant dans l'étape (B). On peut également introduire d'autres adjuvants carbonés au cours des étapes (A) et/ou (B), sous réserve qu'ils ne s'opposent pas à la formation de la mousse recherchée, par exemple du saccharose, de la mélamine, ou une résine phénolique

Alternativement, de tels adjuvants carbonés peuvent être introduits près l'étape (C) préalablement à l'étape (D), par exemple en imprégnant la structure obtenue à l'issue de l'étape (C) avant le traitement thermique de l'étape (D).

A l'issue de ces différentes étapes, on obtient en général un aérogel sous la forme d'un matériau macroscopique généralement monolithique, présentant typiquement des dimensions de l'ordre du centimètre ou de la dizaine de centimètre, voire plus.

Dans ces aérogels , les nanotubes sont avantageusement liés entre eux, les matériaux présentant de préférence un module d'Young supérieur ou égal à 5 MPa, par exemple compris entre 5 et 10 MPa.

Pour certaines applications, les aérogels obtenus peuvent être post-traités, par exemple pour être imprégnés par des espèces catalytiques.

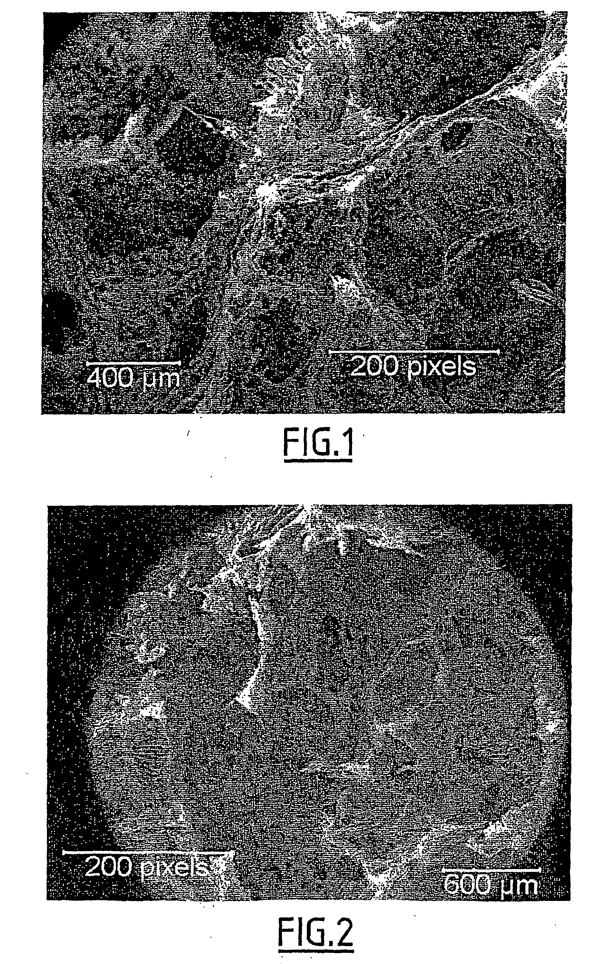

L'invention sera encore davantage explicitée au vu de l'exemple de réalisation ci-après, et des Figures 1 et 2 ci-annexées qui sont des clichés en microscopie électronique à balayage d'un matériau tel que préparés dans l'exemple, illustrant la porosité très spécifique obtenue.

### EXEMPLE

On a réalisé un aérogel selon l'invention dans les conditions ci-après.

### Préparation d'une dispersion aqueuse (d) de nanotubes

Dans le cadre de cet exemple spécifique, on a utilisé des nanotubes de carbone mutifeuillets (Pyrographs III commerciaux, de type PR-24-PS).

Une dispersion aqueuse de ces nanotubes a été effectuée en utilisant le sel de sodium de la carboxyméthylcellulose à titre d'agent tensioactif dispersant.

A cet effet, dans un erlenmeyer de 150 mL, on a introduit 1 g de le sel de carboxyméthylcellulose de sodium, dans 100 mL d'eau, puis on a introduit au mélange réalisé 10 g de nanotubes.

Le milieu obtenu a été placé dans un bain à 0°C (eau liquide + glace) puis il a été soumis à une sonication de 30 minutes à l'aide d'un sonicateur de type Branson 250 muni d'une sonde de type 12 dont l'extrémité mesure 3mm de diamètre (durée d'impulsion de 80% - puissance de 20W). Le bain d'eau et de glace est employé pour éviter un échauffement durant la sonication.

On a ainsi obtenu une dispersion (d) comprenant 10% en masse de nanotubes et 1 % en masse de tensioactif, qu'on a laissé sous agitation durant 12 heures.

### Réalisation d'une mousse (m)

A la dispersion (d) préparée dans l'étape précédente, on a ajouté 1 g de Tergitol NP9 (ce qui correspond à une concentration de 1 % en masse de Tergitol dans le liquide)

On a placé la dispersion ainsi obtenue dans un bulleur, constitué par une colonne verticale de PVC (hauteur : 60 cm ; diamètre : 5 cm), munie d'un fond en verre fritté ayant un diamètre de pore de 30 microns , au travers duquel on injecte de l'azote à un débit constant de 0,2 mL/s. La dispersion a été introduite par un tuyau au-dessus de le colonne, alimentée par une pompe péristaltique.

Après 15 minutes, on a obtenue une mousse (m) relativement stable qu'on a recueillie à l'aide d'une spatule et placé immédiatement dans un bécher.

### Préparation d'un aérogel à partir de la mousse (m)

Le bécher a été immédiatement placé à -80°C et a été maintenu à cette température pendant 5 heures.

A l'issue de cette congélation, on a lyophilisé la mousse congelée obtenue en mettant en oeuvre un lyophilisateur à froid (enceinte sous vide). On a ainsi éliminé l'eau par sublimation, ce par quoi on a obtenu un aérogel.

### Consolidation par traitement thermique

L'aérogel obtenu dans l'étape précédente a été traité thermiquement dans les conditions suivantes :
- montée en température de la température ambiante (25°C) à 400°C en 2 heures,
- plateau à 400°C pendant une heure,
- descente en température de 400°C à la température ambiante (25°C) en 2 heures

On a ainsi obtenu un matériau présentant les propriétés suivantes :
- densité apparente : 0,2
- densité réelle : 2,1
- surface spécifique BET : 36 m²/g
- porosité présentant une macrostructure poreuse ayant des pores de dimensions aux alentours de 50 microns, avec, au sein des parois de cette macrostructure, des pores de taille comprise entre 2 et 50 nm.

## Revendications

1. Procédé de préparation d'un aérogel de carbone comprenant les étapes suivantes :
(A) on réalise une dispersion de nanotubes de carbone dans de l'eau, en employant un agent tensioactif dispersant ;
(B) on réalise une mousse à partir de la dispersion aqueuse de nanotubes obtenue dans l'étape (A), par foisonnement de la dispersion sous l'effet d'un gaz, en présence d'un agent moussant ; et
(C) on congèle la mousse obtenue dans l'étape (B), puis on élimine l'eau par sublimation.

2. Procédé selon la revendication 1, comprenant en outre, après les étapes (A) à (C), une étape (D) supplémentaire dans laquelle on traite thermiquement le matériau obtenu à l'issue de l'étape (C) à une température supérieure à 400°C.

3. Procédé selon la revendication 2, où l'étape (D) est conduite en présence de composés organiques et à une température supérieure à 800°C.

4. Procédé selon la revendication 3, où l'étape (D) est conduite à une température supérieure ou égale à 1200°C.

5. Procédé selon l'une quelconque des revendications 1 à 4, où les nanotubes utilisés dans l'étape (A) ont un diamètre moyen compris entre 10 et 100 nm et une longueur moyenne entre 1 et 20 microns.

6. Procédé selon l'une quelconque des revendications 1 à 5, où l'agent tensioactif employé dans l'étape (A) est un agent tensioactif ionique, de préférence un agent tensioactif anionique de type sulfate, sulfonate ou carboxylate.

7. Procédé selon la revendications 6 où l'agent tensioactif de l'étape (A) est un sel de carboxyméthylcellulose, notamment le sel de sodium de la carboxyméthylcellulose.

8. Procédé selon l'une quelconque des revendications 1 à 7, où la dispersion préparée dans l'étape (A) comprend entre 1 et 15 g de nanotubes par litre.

9. Procédé selon l'une quelconque des revendications 1 à 8, où, dans l'étape (B), on rajoute un agent moussant à la dispersion telle qu'obtenue à l'issue de l'étape (A).

10. Procédé selon la revendication 9, où l'agent moussant ajouté est un tensioactif éthoxylé non ionique, par exemple le Tergitol.

11. Procédé selon la revendication 9, où l'agent moussant ajouté est de l'amidon ou un sucre, notamment un polysaccharide.

12. Procédé selon l'une quelconque des revendications 1 à 6 ou selon la revendication 8, où on utilise du dodécylesulfate de sodium SDS à la fois à titre d'agent tensioactif dispersant de l'étape (A) et d'agent moussant de l'étape (B).

13. Procédé selon l'une quelconque des revendications 1 à 12, où la formation de la mousse de l'étape (B) est effectuée en injectant des bulles de gaz dans la dispersion obtenue à l'issue de l'étape (A), additivée si nécessaire d'un agent moussant, cette injection de bulles de gaz se faisant à travers une membrane poreuse telle qu'un verre fritté au-dessus duquel on place la dispersion.

14. Procédé selon l'une quelconque des revendications 1 à 13, où, dans l'étape (B), on arrose le haut de la mousse en formation par une dispersion ayant la même composition que la dispersion qu'on fait mousser par foisonnement.

15. Procédé selon l'une quelconque des revendications 1 à 14, où, dans la mousse réalisée dans l'étape (B), le rapport volumique liquide/gaz est inférieur à 0,1.

16. Aérogel de carbone résultant de la coagulation de nanotubes de carbone sous la forme d'une structure alvéolaire, susceptible d'être obtenu selon le procédé de l'une quelconque des revendications 1 à 15.

17. Aérogel de carbone selon la revendication 16, qui présente une structure à porosité essentiellement ouverte et qui comprend à la fois :
- une "macroporosité" constituée d'alvéoles (ou « macropores ») ayant une dimension moyenne supérieure à 40 microns ; et
- une "super-mésoporosité", essentiellement localisée au sein des parois des alvéoles de la macroporosité précitée, cette nanoporosité comprenant des pores de dimension moyenne inférieure à 60 nm.

18. Aérogel de carbone selon la revendication 16 ou 17, ayant une densité apparente inférieure ou égale à 0,25 g/cm³.

19. Aérogel de carbone selon l'une quelconque des revendications 16 à 18, où le volume occupé par les pores représente au moins 80% du volume total du matériau.

20. Aérogel de carbone selon l'une quelconque des revendications 16 à 19, ayant une surface spécifique comprise entre 25 et 300 m²/g.

21. Utilisation d'un aérogel de carbone selon l'une quelconque des revendications 16 à 20 à titre de matériaux de séparation, notamment pour effectuer des séparations de type solide/liquide.

22. Utilisation d'un aérogel de carbone selon l'une quelconque des revendications 16 à 20 à titre de biomatériaux, par exemple à titre de support de croissance cellulaire.

23. Utilisation d'un aérogel de carbone selon l'une quelconque des revendications 16 à 20 à titre de support d'espèces catalytiques, pour le stockage de liquide non mouillant, notamment pour le stockage de liquides énergétiques dans des membranes de piles à combustibles, ou comme électrode négative dans des piles au lithium, ou à titre d'isolants acoustique ou anti-vibrationnels.

## Claims

1. Process for the preparation of a carbon aerogel, comprising the following steps:
(A) a dispersion of carbon nanotubes in water is produced using a dispersing surface-active agent;
(B) a foam is produced from the aqueous dispersion of nanotubes obtained in step (A), by swelling the dispersion under the action of a gas in the presence of a foaming agent; and
(C) the foam obtained in step (B) is frozen, and then the water is removed by sublimation.

2. Process according to claim 1, further comprising, after steps (A) to (C), an additional step (D) in which the material obtained at the end of step (C) is subjected to heat treatment at a temperature greater than 400°C.

3. Process according to claim 2, wherein step (D) is carried out in the presence of organic compounds and at a temperature greater than 800°C.

4. Process according to claim 3, wherein step (D) is carried out at a temperature greater than or equal to 1200°C.

5. Process according to any one of claims 1 to 4, wherein the nanotubes used in step (A) have an average diameter of from 10 to 100 nm and an average length of from 1 to 20 microns.

6. Process according to any one of claims 1 to 5, wherein the surface-active agent used in step (A) is an ionic surface-active agent, preferably an anionic surface-active agent of the sulfate, sulfonate or carboxylate type.

7. Process according to claim 6, wherein the surface-active agent of step (A) is a carboxymethylcellulose salt, especially carboxymethylcellulose sodium salt.

8. Process according to any one of claims 1 to 7, wherein the dispersion prepared in step (A) comprises from 1 to 15 g of nanotubes per litre.

9. Process according to any one of claims 1 to 8, wherein, in step (B), a foaming agent is added to the dispersion as obtained at the end of step (A).

10. Process according to claim 9, wherein the foaming agent that is added is a non-ionic ethoxylated surfactant, for example Tergitol.

11. Process according to claim 9, wherein the foaming agent that is added is starch or a sugar, especially a polysaccharide.

12. Process according to any one of claims 1 to 6 or according to claim 8, wherein sodium dodecylsulfate SDS is used both as the dispersing surface-active agent of step (A) and as the foaming agent of step (B).

13. Process according to any one of claims 1 to 12, wherein the formation of the foam of step (B) is carried out by injecting gas bubbles into the dispersion obtained at the end of step (A), to which a foaming agent has been added if necessary, the injection of gas bubbles being carried out through a porous membrane such as a sintered glass, above which the dispersion is placed.

14. Process according to any one of claims 1 to 13, wherein, in step (B), the top of the developing foam is sprinkled with a dispersion having the same composition as the dispersion that is being foamed by swelling.

15. Process according to any one of claims 1 to 14, wherein, in the foam produced in step (B), the ratio by volume liquid/gas is less than 0.1.

16. Carbon aerogel resulting from the coagulation of carbon nanotubes in the form of a cellular structure, obtainable by the process of any one of claims 1 to 15.

17. Carbon aerogel according to claim 16, which has a structure with substantially open porosity and which includes both:
- a "macroporosity" constituted by cells (or "macropores") having an average size greater than 40 microns; and
- a "super-mesoporosity", located substantially within the walls of the cells of the above-mentioned macroporosity, the nanoporosity comprising pores having an average size less than 60 nm.

18. Carbon aerogel according to claim 16 or 17, having an apparent density less than or equal to 0.25 g/cm³.

19. Carbon aerogel according to any one of claims 16 to 18, wherein the volume occupied by the pores represents at least 80% of the total volume of the material.

20. Carbon aerogel according to any one of claims 16 to 19, having a specific surface area of from 25 to 300 m²/g.

21. Use of a carbon aerogel according to any one of claims 16 to 20 as a separation material, especially for carrying out separations of the solid/liquid type.

22. Use of a carbon aerogel according to any one of claims 16 to 20 as a biomaterial, for example as a cell growth support.

23. Use of a carbon aerogel according to any one of claims 16 to 20 as a support for catalytic species, for storing non-wetting liquid, especially for storing high-energy liquids in fuel cell membranes, or as a negative electrode in lithium batteries, or as a sound or anti-vibration insulation material.

## Patentansprüche

1. Verfahren zur Herstellung eines Kohlenstoff-Aerogels, folgende Schritte umfassend:
(A) es wird eine Dispersion von Kohlenstoff-Nanoröhren in Wasser hergestellt, wobei ein dispergierendes, grenzflächenaktives Mittel verwendet wird;
(B) aus der im Schritt (A) erhaltenen wässrigen Dispersion von Nanoröhren wird durch Aufquellen der Dispersion unter der Wirkung eines Gases im Beisein eines Schaumbildners ein Schaum hergestellt; und
(C) der im Schritt (B) erhaltene Schaum wird eingefroren und dann das Wasser durch Sublimation entzogen.

2. Verfahren nach Anspruch 1, das darüber hinaus nach den Schritten (A) und (C) einen zusätzlichen Schritt (D) umfasst, in dem der am Ende des Schritts (C) erhaltene Stoff bei einer Temperatur von über 400°C wärmebehandelt wird.

3. Verfahren nach Anspruch 2, wobei der Schritt (D) im Beisein organischer Verbindungen und bei einer Temperatur von über 800°C durchgeführt wird.

4. Verfahren nach Anspruch 3, wobei der Schritt (D) bei einer Temperatur von über oder gleich 1200°C durchgeführt wird.

5. Verfahren nach einem der Ansprüche 1 bis 4, wobei die im Schritt (A) verwendeten Nanoröhren einen mittleren Durchmesser zwischen 10 und 100 nm und eine mittlere Länge zwischen 1 und 20 Mikrometer haben.

6. Verfahren nach einem der Ansprüche 1 bis 5, wobei das im Schritt (A) verwendete grenzflächenaktive Mittel ein ionisches Tensid, vorzugsweise ein anionisches Tensid von der Art Sulfat, Sulfonat oder Carboxylat ist.

7. Verfahren nach Anspruch 6, wobei das grenzflächenaktive Mittel von Schritt (A) ein Carboxymethylcellulosesalz, insbesondere das Natriumsalz der Carboxymethylcellulose ist.

8. Verfahren nach einem der Ansprüche 1 bis 7, wobei die im Schritt (A) hergestellte Dispersion zwischen 1 und 15 g Nanoröhren pro Liter umfasst.

9. Verfahren nach einem der Ansprüche 1 bis 8, wobei im Schritt (B) der wie am Ende des Schritts (A) erhaltenen Dispersion ein Schaumbildner zugesetzt wird.

10. Verfahren nach Anspruch 9, wobei der zugesetzte Schaumbildner ein nichtionisches ethoxyliertes Tensid, zum Beispiel Tergitol ist.

11. Verfahren nach Anspruch 9, wobei der zugesetzte Schaumbildner Stärke oder ein Zucker, insbesondere ein Polysaccharid ist.

12. Verfahren nach einem der Ansprüche 1 bis 6 oder nach Anspruch 8, wobei Natriumdodecylsulfat SDS gleichzeitig als dispergierendes grenzflächenaktives Mittel des Schritts (A) und Schaumbildner des Schritts (B) verwendet wird.

13. Verfahren nach einem der Ansprüche 1 bis 12, wobei die Ausbildung des Schaums von Schritt (B) erfolgt, indem Gasblasen in die am Ende des Schritts (A) erhaltene Dispersion, gegebenenfalls um einen Schaumbildner ergänzt, eingespritzt werden, wobei dieses Einspritzen durch eine poröse Membran, wie etwa ein Sinterglas, hindurch erfolgt, über dem die Dispersion platziert wird.

14. Verfahren nach einem der Ansprüche 1 bis 13, wobei im Schritt (B) die Oberseite des sich ausbildenden Schaums mit einer Dispersion begossen wird, die dieselbe Zusammensetzung hat wie die Dispersion, die man durch Aufquellen schäumen lässt.

15. Verfahren nach einem der Ansprüche 1 bis 14, wobei in dem im Schritt (B) hergestellten Schaum das Volumenverhältnis Flüssigkeit/Gas unter 0,1 liegt.

16. Kohlenstoff-Aerogel, das sich aus der Koagulation von Kohlenstoff-Nanoröhren in Form einer Zellenstruktur ergibt, das nach dem Verfahren eines der Ansprüche 1 bis 15 erhalten werden kann.

17. Kohlenstoff-Aerogel nach Anspruch 16, das eine Struktur mit einer im Wesentlichen offenen Porosität aufweist und gleichzeitig umfasst:
- eine "Makroporosität", die aus Zellen (oder "Makroporen") mit einer mittleren Abmessung von über 40 Mikrometer besteht; und
- eine "Supermesoporosität", die sich im Wesentlichen im Inneren der Wände der Zellen der vorgenannten Makroporosität befindet, wobei diese Nanoporosität Poren mit einer mittleren Abmessung von unter 60 nm umfasst.

18. Kohlenstoff-Aerogel nach Anspruch 16 oder 17, mit einer Rohdichte von kleiner oder gleich 0,25 g/cm³.

19. Kohlenstoff-Aerogel nach einem der Ansprüche 16 bis 18, wobei das von den Poren eingenommene Volumen mindestens 80% des Gesamtvolumens des Materials darstellt.

20. Kohlenstoff-Aerogel nach einem der Ansprüche 16 bis 19, mit einer spezifischen Oberfläche zwischen 25 und 300 m²/g.

21. Verwendung eines Kohlenstoff-Aerogels nach einem der Ansprüche 16 bis 20 als Trennmaterialien, insbesondere zur Durchführung von Trennvorgängen der Art Feststoff/Flüssigkeit.

22. Verwendung eines Kohlenstoff-Aerogels nach einem der Ansprüche 16 bis 20 als Biomaterialien, zum Beispiel als Zellwachstumsträger.

23. Verwendung eines Kohlenstoff-Aerogels nach einem der Ansprüche 16 bis 20 als Katalysatorträger, zur Einlagerung nicht benetzender Flüssigkeit, insbesondere zur Einlagerung energiegeladener Flüssigkeiten in Membranen von Brennstoffzellen, oder als Minuselektrode in Lithiumbatterien, oder als geräusch- oder schwingungsdämpfende Isolierstoffe.
